# EUROPÄISCHE PATENTSCHRIFT

(11) **EP 0 810 189 B1**
(45) Veröffentlichungstag und Bekanntmachung des Hinweises auf die Patenterteilung: **30.08.2000**
(21) Anmeldenummer: 97108540.2
(22) Anmeldetag: 27.05.1997
(51) Int. Cl.: C04B 35/113, C04B 35/626, H01M 10/39

(54) **Flüssigkeitsphasensinterprozess für Aluminat-Keramiken**
Liquid phase sintering process for alumina ceramics
Procédé de frittage en phase liquide pour céramiques en alumine

(30) Priorität: 28.05.1996 DE 19621413
(43) Veröffentlichungstag der Anmeldung: 03.12.1997
(73) Patentinhaber: Max-Planck-Gesellschaft zur Förderung der Wissenschaften e.V., 80539 München (DE)
(72) Erfinder: Aldinger, Fritz, Prof. Dr., 70771 Leinfelden-Echterdingen (DE); Schäfer, Günter, Dr., 70563 Stuttgart (DE); Hachtel, Andreas, 70771 Leinfelden-Echterdingen (DE)
(74) Vertreter: Weiss, Wolfgang, Dipl.-Chem. Dr.

(56) Entgegenhaltungen:
- WO-A-90/03955
- DE-C- 4 122 586
- FR-A- 2 257 554
- US-A- 4 013 477
- US-A- 4 233 078
- DATABASE WPI Section Ch, Week 8928 Derwent Publications Ltd., London, GB; Class L02, AN 89-201357 XP002040389 & JP 01 138 170 A (AIKO N) , 31.Mai 1989
- JOURNAL OF MATERIALS SCIENCE, Bd. 19, Nr. 3, März 1984, Seiten 695-715, XP002040388 STEVENS R ET AL: "Review: Structure, properties and production of beta-alumina"

## Beschreibung

Die vorliegende Erfindung betrifft die Verwendung eines borhaltigen Sinteradditivs bei der Herstellung von Aluminiumoxid-Keramiken, ein Verfahren zur Herstellung eines Aluminiumoxid-Keramikformkörpers sowie einen borhaltigen Aluminiumoxid-Keramikformkörper.

In JP 113 8170 A wird die Herstellung von gesintertem Aluminiumoxid aus Al2O3, CaO und B2O3 beschrieben. Diese Literaturstelle betrifft aber nicht die Herstellung von β- oder β"-Phasen.

β-Aluminate sind zweidimensionale Schichtstrukturen aus Aluminiumoxid-Spinellblöcken zwischen denen in regelmäßiger Anordnung Alkalimetalloxid-Schichten eingelagert sind. Die hohe Defektkonzentration in den Alkalimetalloxid-Schichten ist der Grund für eine sehr gute Beweglichkeit der Alkalimetallionen. Man unterscheidet zwei Strukturen die unterschiedlich gut ionisch-leitend sind. Die höher ionisch-leitende Struktur wird β''-Phase genannt. Sie enthält einen höheren Anteil an Alkalimetalloxid als die β-Phase.

R.Stevens et al., J. Material Science 19 (1984), 695-715, geben einen Überblick über die Struktur, die Eigenschaften und die Herstellung von β-Aluminiumoxyd. In diesem Artikel wird beschrieben, daß eine Bildung von β- und β"-Aluminiumoxyd bei etwa 1.600°C stattfindet.

Die Elementarzelle der β''-Phase besteht aus drei γ-Al₂O₃-Spinellblöcken, zwischen denen die Na₂O-Schichten eingelagert sind. Die Leitfähigkeitsebenen können hier als Defektstruktur der Aluminiumoxid-Schichten bezeichnet werden (vgl. G.C. Farrington, B. Dunn, Solid State Ionics 7 (1982), 267; F. Harbach, J.Mat.Sci. 18 (1983), 2437; R. Collongues et al., J.Phys.Chem.Solids 45 (1984), 981).

Die Elementarzelle der β-Phase besteht aus zwei γ-Al₂O₃-Spinellblöcken. Bei ihr liegt in der Leitfähigkeitsebene eine kristallographische Spiegelebene (vgl. R. Collongues et al. wie oben).

In FR 225 7554 A wird ein Verfahren zur Herstellung eines β-Aluminiumoxidformkörpers beschrieben, bei dem 4 bis 6 Gew.-% eines Glaspulvers verwendet werden.

Die β''-Phase eignet sich aufgrund ihrer hohen Ionenleitfähigkeit, insbesondere Natriumionenleitfähigkeit, als Festelektrolyt für Batterien und Brennstoffzellen (vgl. R. Knoedler und R. Krapf, J.Power Source 10 (1983), 263 - 270; Zebra Zelle, J. Coetzer et al., J.Electrochem.Soc. 134 (1987), 2379).

Für Brennstoffzellen sind besonders Protonen-leitende Keramiken interessant. Die Herstellung solcher Materialien ist jedoch bisher nicht gelungen. Die einzige Möglichkeit besteht durch Ionenaustausch mit einem geeigneten Ausgangsmaterial. Aufgrund der sehr ähnlichen Elementarzellen von K-β"-Aluminaten und H-β''-Aluminaten kommt dafür K-β''-Aluminat als Ausgangsmaterial in Frage. Weiterhin ist der Austausch von Natrium-Ionen in Na-β''-Aluminat oder von Kalium-Ionen in K-β"-Aluminat gegen andere Ionen z.B. Li⁺, K⁺, Rb⁺, H₃O⁺, NH₄⁺, Ca²⁺, Sr²⁺, Ba²⁺, Cd²⁺ und Pb²⁺ von großem Interesse, da sich dadurch Festkörperionenleiter mit interessanten Eigenschaften herstellen lassen, die für eine Vielzahl von technischen Einsatzmöglichkeiten in Frage kommen. Vorraussetzung für diesen Herstellungsweg ist jedoch eine dichte Na-β''-Aluminiumoxid bzw. K-β"-Aluminiumoxid-Keramik, die eine ausreichende Festigkeit besitzt, um den beim Ionenaustausch auftretenden Spannungen zu widerstehen. Die β"- und β-Aluminate zeigen jedoch aufgrund ihrer zweidimensionalen Struktur ein stark anisotropes Kornwachstum. Bei höheren Temperaturen (> 1500°C) tritt zusätzlich eine starke Kornvergröberung ein. Ein weiteres Problem stellt der Verlust von Alkalimetalloxid bei höheren Temperaturen dar. Als Folge dieser Vorgänge zeigt das Material ein schlechtes Verdichtungsverhalten und Festphasen gesinterte Proben weisen daher eine hohe Porösität auf und sind in dieser Form für den Einsatz als Elektrolyt nicht geeignet.

In der DE-41 22 586 C1 ist ein Verfahren zur Herstellung von K- oder Rb-β"-Aluminiumoxid-Keramikformkörpern die als Innenleiter Verwendung finden, beschrieben. Das Verfahren umfaßt einen Sinterschritt, der bei einer Temperatur im Bereich von 1500°C bis 1700°C durchgeführt wird und es werden β"-Aluminiumoxid-Keramiken erhalten. Ein Nachteil dieses Verfahrens besteht jedoch in seiner schwierigen Reproduzierbarkeit.

In US 4,013,477 wird ein Verfahren zur Herstellung eines β"-Aluminiumoxid-Keramikkörpers beschrieben, bei dem ein Pulvergemisch mit β"-Impfkörpern versetzt wird und der Grünkörper bei Temperaturen von etwa 1.600°C gesintert wird.

Aufgabe der vorliegenden Erfindung ist deshalb eine verbesserte Herstellung von Aluminiumoxid-Keramiken, welche insbesondere zur Verwendung als Ionenleiter geeignet sind.

Diese Aufgabe wird erfindungsgemäß gelöst durch die Verwendung eines borhaltigen Sinteradditivs bei der Herstellung von β"-Aluminiumoxid-Keramiken. Überraschenderweise wird durch die Verwendung eines borhaltigen Sinteradditivs schon bei Temperaturen von 1000°C eine flüssige Phase erhalten, so daß ein Flüssigphasensinterprozeß schon bei einer relativ geringen Temperatur erfolgen kann. Im Gegensatz dazu tritt die Schmelzphase beim Verfahren der DE-41 22 586 erst bei über 1500°C, also bei wesentlich höherer Temperatur auf.

Das borhaltige Sinteradditiv löst sich beim Sinterprozeß im allgemeinen nicht wesentlich in der Al₂O₃-Phase und bildet beim Abkühlen eine separate Glasphase, welche in Poren der keramischen Matrix vorliegt und deren Struktur nicht beeinträchtigt.

Als erfindungsgemäße Sinteradditive eignen sich alle borhaltigen Verbindungen. Bevorzugt werden auf Boroxid basierende Verbindungen wie etwa B₂O₃ oder Borate verwendet, um mit Aluminiumoxid eine Schmelzphase zu bilden. Bevorzugt enthält das Sinteradditiv zusätzlich zu dem Boroxid oder Borat ein oder mehrere Alkalimetalloxide wie beispielsweise Li₂O, Na₂O, K₂O, Rb₂O oder/und CsO₂. Anstelle oder zusätzlich zu dem Alkalimetalloxid kann das Sinteradditiv bevorzugt ein oder mehrere Metalloxide von anderen Metallen enthalten. Beispiele für geeignete Metalloxide sind MgO, ZnO, NiO, MnO, FeOₓ, CrOₓ, CoO und SnOₓ. Besonders bevorzugt enthält das Sinteradditiv ein oder mehrere Metalloxide ausgewählt aus K₂O, Li₂O, Na₂O und MgO. Beispielsweise führt die Zugabe von Li₂O zur Zusammensetzung Li-B-Al-O und mit K₂O zur Zusammensetzung K-Li-B-Al-O.

Als Sinteradditiv kann auch ein gemischtes Metallboroxid verwendet werden. Geeignete Sinteradditive sind beispielsweise KBO₂, K₂B₂O₄, K₂B₄O₇, Mg₂B₂O₅, NaBO₂, Na₂B₂O₄, Na₂B₄O₇, MgB₄O₇, LiBO₂, Li₂B₂O₄, Li₂B₄O₇ und Mg₃B₂O₆ sowie Kombinationen von diesen Verbindungen. Anstelle von Mg oder Li können auch die oben aufgeführten Metalle, nämlich Zn, Ni, Mn, Fe, Cr, Co und Sn in gemischten Metallboroxiden eingesetzt werden. Besonders bevorzugt wird als Sinteradditiv Na₂B₄O₇ verwendet. Durch die erfindungsgemäße Verwendung der borhaltigen Sinteradditive können insbesondere β-Aluminiumoxid-Keramiken und besonders bevorzugt β"-Aluminiumoxid-Keramiken mit hoher Qualität relativ einfach und gut reproduzierbar hergestellt werden.

Ein weiterer Gegenstand der Erfindung ist ein Verfahren zur Herstellung eines β"-Aluminiumoxid-Keramikformkörpers wobei man pulverförmiges Aluminiumoxid durch Sintern im Bereich von 1000°C bis 1500°C unter Zusatz eines borhaltigen Sinteradditivs in einen Keramikformkörper überführt. Bevorzugt werden als pulverförmige Aluminiumoxid-Rohstoffe Bayerit und Böhmit verwendet. Das Aluminiumoxid weist dabei bevorzugt eine mittlere Korngröße von < 1 µm auf.

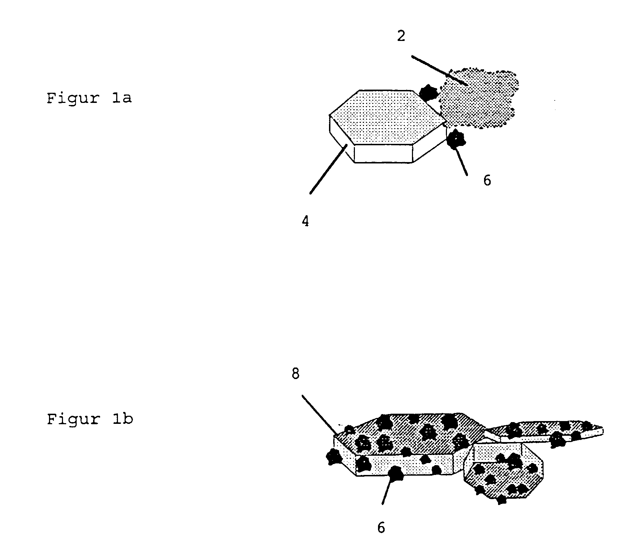

Der Sinterprozeß kann einerseits mit einer zwei-phasigen Pulvermischung durchgeführt werden, wobei ein Metalloxid, beispielsweise ein Alkalimetalloxid, und Aluminiumoxid als eine Phase vorgemischt oder vorreagiert werden und Aluminiumoxid und ein weiteres Metalloxid, beispielsweise ein Magnesiumoxid, als zweite Phase vorgemischt oder vorreagiert werden. Das Vormischen kann auf beliebige Weise erfolgen, z.B. durch Vermahlen von Al₂O₃- und Metalloxidpulver in einer Kugelmühle, die z.B. Mahlkugeln aus Korund enthält, unter Zusatz eines alkoholischen Mediums und anschließendes Trocknen. Das Vormischen kann auch in großtechnischem Maßstab in einem Mahlwerk durch Herstellen eines wäßrigen Schlickers und anschließendes Sprühtrocknen erfolgen. Andererseits können auch vorreagierte Metalloxid/Aluminiumoxidpulver eingesetzt werden, z.B. mit Alkalimetalloxid- oder/und MgO-dotierte Al₂O₃-Pulver. Auf diese Weise entstehen zwei Aluminiumoxidphasen mit gegebenenfalls unterschiedlichen Schmelzpunkten, so daß nach Vermischen beider Phasen mit dem Sinteradditiv die niedriger schmelzende Phase beim Sintervorgang gemeinsam mit dem Sinteradditiv lokal einen hohen Anteil an flüssiger Phase erzeugt (siehe Fig. 1a).

Bevorzugt ist es jedoch, eine homogene Aluminiumoxid- bzw. Metalloxid/Aluminiumoxidphase zu verwenden, in der das Sinteradditiv homogen verteilt ist. Hierzu wird das Aluminiumoxid-bzw. das Metalloxid/Aluminiumoxidpulver vor dem Sintern homogen mit dem Sinteradditiv vermischt. Die Verwendung homogener Aluminiumoxidphasen begünstigt die Verdichtung während des Sinterprozesses.

Besonders bevorzugt werden die Aluminiumoxid- bzw. Metalloxid/Aluminiumoxidpulver mit dem borhaltigen Sinteradditiv beschichtet. Diese Beschichtung kann z.B. dadurch erfolgen, daß das Sinteradditiv in Form eines gelösten Salzes, z.B. als konzentrierte wäßrige Lösung, den gegebenenfalls in einem alkoholischen oder/und wäßrigen Medium suspendierten Keramikpulverteilchen zugesetzt wird. Nach Trocknung der resultierenden Mischung sind die Keramikpulverteilchen homogen mit einer dünnen Schicht des Sinteradditivs beschichtet. Auf solche Weise beschichtete Keramikteilchen (siehe Fig. 1b) sind die am besten geeigneten Ausgangsmaterialien für das erfindungsgemäße Verfahren.

Das Sinterverfahren kann weiterhin durch die Wahl einer geeigneten Sinteratmosphäre verbessert werden. Bevorzugt ist eine wasserfreie Sinteratmosphäre wie beispielsweise eine trockene Luft- oder Sauerstoffatmosphäre, welche einen Alkali-metalloxiddampfdruck von mindestens 1 Pa, bevorzugt von mindestens 100 Pa und besonders bevorzugt von mindestens 1000 Pa aufweist. Der Alkalimetalloxid-Dampfdruck dient dazu, die Zersetzungsreaktion der β''-Phase und die dadurch ausgelöste Vergröberung des Materials zu verhindern. Weiterhin verhindert ein Alkali-metalloxiddampfdruck in der Sinteratmosphäre Abdampf- und somit Zersetzungsverluste in der zu sinternden Keramik. Der Alkalimetalloxiddampfdruck in der Sinteratmosphäre kann bevorzugt durch Zugabe von Alkalimetalloxidboraten wie etwa Natrium- oder/und Kaliumborat als Sinteradditiv eingestellt werden. Bevorzugt wird das Alkalimetallborat zu restlichen Borat in einem Gewichtsverhältnis zwischen 10:1 und 1:10 eingesetzt.

Das erfindungsgemäße Verfahren wird bei einer Temperatur von 1000°C bis 1500°C und bevorzugt bei einer Temperatur von 1250°C bis 1400°C durchgeführt. Bereits bei diesen niedrigen Temperaturen werden dichte Keramiken erhalten. Bei Einsatz hoher Sintertemperaturen von > 1300°C kann der Sinterprozeß bei bestimmten Ausführungsformen des erfindungsgemäßen Verfahrens so gesteuert werden, daß ein mindestens ein Teil des borhaltigen Sinteradditivs abdampft. Auf s diese Weise kann eine Verringerung des Anteils der Fremdphase in der keramischen Matrix erreicht werden.

Das borhaltige Sinteradditiv wird bevorzugt in einer Menge von 0,1- 12 Gew.-%, besonders bevorzugt von 2 - 10 Gew.-% und am meisten bevorzugt von 3 - 6 Gew.-%, berechnet als B₂O₃, bezogen auf das Gesamtgewicht der Sintermischung eingesetzt. Bei einer Menge des Sinteradditivs von weniger als 0,1-Gew.-% kann das Sinterverfahren nicht mehr reproduzierbar durchgeführt werden.

Ein weiterer Gegenstand der vorliegenden Erfindung sind durch das oben beschriebene Verfahren erhältlichen β"-Aluminiumoxid-Keramikformkörper. Wenn der Sinterprozess bei einer Temperatur stattfindet, bei der das borhaltige Sinteradditiv nicht signifikant abdampft, enthalten diese Formkörper Bor in einer Menge o von 0,1 Gew.-% bis 12 Gew.-%, bevorzugt in einer Menge von 2 Gew.-% bis 10 Gew.-% und besonders bevorzugt von 3 Gew.-% bis 6 Gew.-%, berechnet als B₂O₃ bezogen auf das Keramikgesamtgewicht. Bevorzugt handelt es sich um eine β-Aluminiumoxid-Keramik und besonders bevorzugt um eine β"-Aluminiumoxid-Keramik. Das Bor liegt vorzugsweise als eine oxidische Glasphase vor, welche in die Poren der keramischen Matrix eindringt. Wenn hingegen der Sinterprozess bei einer Temperatur stattfindet, bei der das borhaltige Sinteradditiv weitgehend abdampft, enthalten die Formkörper Bor in einer Menge von der unteren Nachweisgrenze bis zu 1 Gew.-% vorzugsweise von 0,00001 Gew.-% bis 0,1 Gew.-%.

Erfindungsgemäß können Keramiken hergestellt werden die neben Bor, Aluminium und Sauerstoff beliebige Metallionen beinhalten. Bevorzugt enthalten die erfindungsgemäßen Aluminiumoxid-Keramiken neben Bor Li, Na, K, Rb, Cs, Mg, Zn, Ni, Mn, Fe, Cr, Co oder/und Sn. Besonders bevorzugt umfassen die erfindungsgemäßen Aluminiumoxid-Keramiken eine K-Li-B-Al-O-, eine K-Mg-B-Al-O- oder/und K-Li-Mg-B-Al-O-Phase. Solche Phasen stellen hervorragende Kaliumionenleiter dar. Ebenfalls bevorzugt sind Aluminiumoxid-Keramiken, die eine Na-Li-B-Al-O-, eine Na-Mg-B-Al-O- oder/und Na-Li-Mg-B-Al-O-Phase umfassen. Solche Festphasen stellen hervorragende Natriumionenleiter dar. Bei diesen Keramiken kann sich der Anteil der B-Komponente abhängig von der verwendeten Sintertemperatur stark vermindern, gegebenenfalls sogar bis zur unteren Nachweisgrenze.

Für eine Kombination von Na- und K-Ionenleitung können auch Aluminiumoxid-Keramiken mit einer K-Na-Li-B-Al-O-, einer K-Na-Mg-B-Al-O- oder/und einer K-Na-Li-Mg-B-Al-O-Phase hergestellt werden. Auch bei diesen Keramiken kann sich der Anteil der B-Komponente stark vermindern.

Zur Herstellung definierter Zusatzleitfähigkeiten bei der Herstellung gemischter oxidischer Leiter können weitere Komponenten zugesetzt werden wie beispielsweise ZnO, NiO, MnO, FeOₓ, CrOₓ, CoO und SnO. Diese Metalloxide werden bevorzugt anstelle von Li₂O oder/und MgO eingesetzt.

Ein weiterer Gegenstand der Erfindung ist die Verwendung eines erfindungsgemäßen Keramikformkörpers als Ionenleiter. Insbesondere eignen sich die erfindungsgemäßen Keramikformkörper, je nach Zusammensetzung, als Kalium oder/und Natriumionenleiter.

Die Erfindung wird durch die folgenden Beispiele und die beigefügten Figuren näher erläutert, worin
- Figur 1a: schematisch eine Mischung aus zwei verschiedenen vorreagierten Metalloxid/Aluminiumoxidpulvern, nämlich aus vorreagiertem K₂O und Al₂O₃ (2), vorreagiertem MgO und Al₂O₃ (4), und dem Sinteradditiv (6) zeigt und
- Figur 1b: schematisch ein mit dem Sinteradditiv (6) homogen beschichtetes Metalloxid/Aluminiumoxidpulver aus vorreagiertem K₂O und MgO und Al₂O₃ (8) zeigt,
- Figur 2: die relative Dichte gesinterter K-β-Aluminate aus unterschiedlichen Ausgangsstoffen und Sinteradditiv-gehalten darstellt,
- Figur 3: Sinterverläufe in Abhängigkeit der Temperatur von unterschiedlichen Ausgangsstoffen zeigt,
- Figur 4: den Einfluß der Sinteratmosphäre auf das Gefüge anhand von Bruchflächenaufnahmen an beschichteten Bayerit verdeutlicht wobei
- Figur 4a: eine durch Sintern in reiner Sauerstoffatmosphäre und
- Figur 4b: eine durch Sintern in Sauerstoffatmosphäre mit kontrolliertem K₂O-Dampfdruck erhaltene Keramikoberfläche zeigt,
- Figur 5: die ionische Leitfähigkeit von Flüssigphasen gesintertem K-β/β''-Aluminat darstellt.

### BEISPIELE

### Beispiel 1:

### Herstellung von Keramikformkörpern und Bestimmung ihrer relativen Dichte

Es wurden homogen beschichtete Mischungen aus Bayerit mit einer BET-Oberfläche von 28,3 m²/g und dem Sinteradditiv Na₂B₄O₇ oder NaBO₂, aus Böhmit mit feiner Korngröße mit einer BET-Oberfläche von 8,5 m²/g und dem Sinteradditiv Na₂B₄O₇ oder NaBO₂ und aus Böhmit mit gröberer Korngröße einer BET-Oberfläche von 10,8 m²/g und dem Sinteradditiv Na₂B₄O₇ oder NaBO₂ hergestellt. Hierzu wurden die Boratsalze in Form einer konzentrierten wäßrigen Lösung den in einem alkoholischen Medium vorliegenden Keramikpartikeln unter ständigem Rühren zugetropft. Nach Abschluß des Zutropfens wurde das resultierende Gemisch getrocknet.

Weiterhin wurde eine Mischung aus zwei verschiedenen Aluminiumoxidpulvern und einem Sinteradditiv hergestellt.

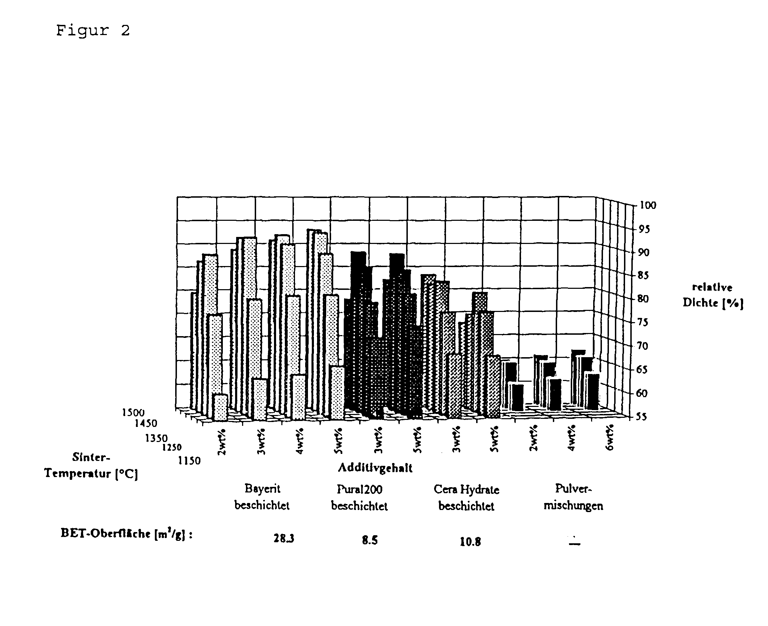

Das Sinteradditiv wurde in einer Menge von 2 - 6 Gew.-% bezüglich des Trockengesamtgewichts eingesetzt. Die Mischungen wurden dann bei einer ansteigenden Sintertemperatur von 1150°C bis 1550°C gesintert. Die relative Dichte der resultierenden Keramikformkörper ist in Figur 2 dargestellt.

### Beispiel 2:

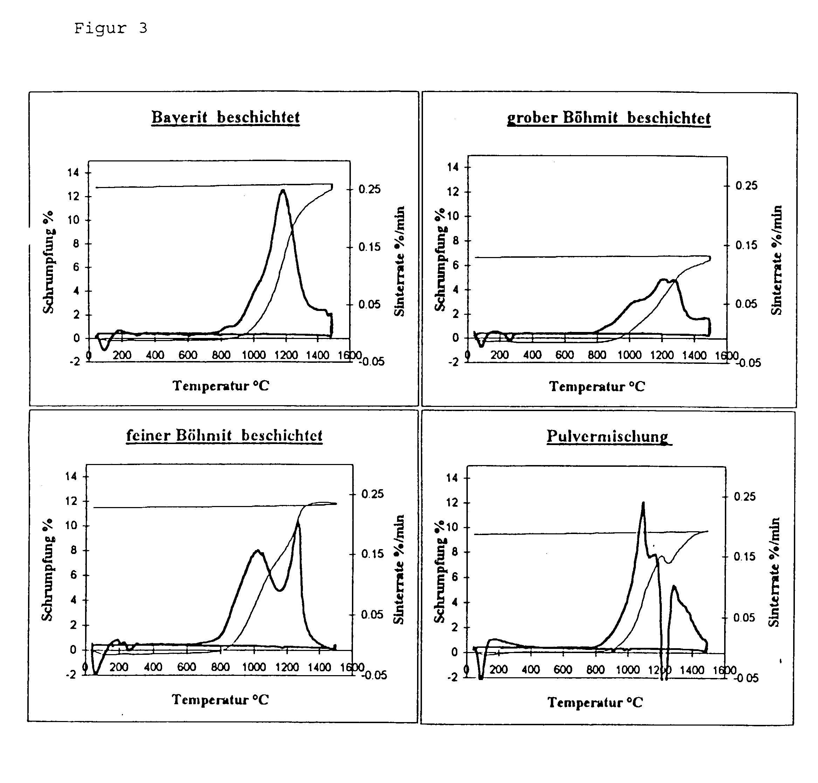

Es wurden die Sinterverläufe der in Beispiel 1 beschriebenen Pulvermischungen in Abhängigkeit der Temperatur untersucht. Die Ergebnisse sind in Figur 3 dargestellt.

Beschichteter Bayerit zeigt eine maximale Verdichtungsrate bei etwa 1150°C. Die Verdichtung erfolgt in einem einzigen und deshalb gut kontrollierbaren Schritt.

Beim Einsatz von feinkörnigem Böhmit schwankt die Verdichtungsrate bereits beträchtlich und die relative Dichte der erhaltenen Keramikformkörper ist nicht so hoch wie bei der Verwendung von Bayerit als Ausgangssubstanz. Allerdings bietet feinkörniger Böhmit den Vorteil der Ausbildung eines gröberen Gefüges, wodurch eine erhöhte Leitfähigkeit erhalten werden kann.

Grobkörniger Böhmit bildet zwar ebenfalls ein grobes Gefüge aus, verdichtet jedoch deutlich weniger. Die Verdichtungsrate von Pulvermischungen schwankt so stark, daß mechanische Spannungen im Sinterkörper erzeugt werden.

### Beispiel 3:

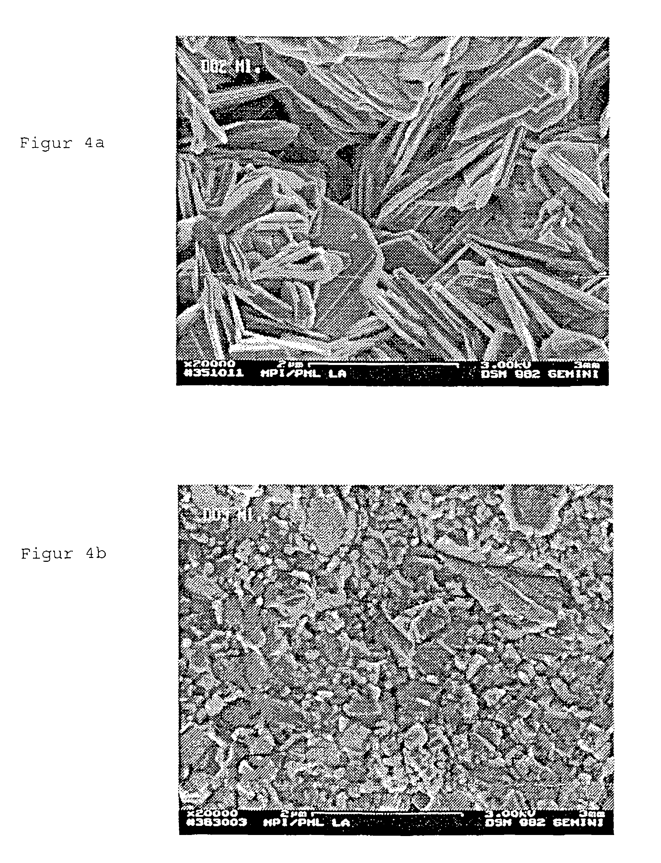

Es wurde der Einfluß des Alkalimetalldampfdrucks auf die Gefügeausbildung von K-β-Aluminaten untersucht. Die Ergebnisse sind in Figur 4 dargestellt.

Während bei einer reinen wasserfreien Sauerstoffatmosphäre eine sehr starke Gefügevergröberung auftritt (Fig. 4a) kann mit einem genügend hohen äußeren K₂O-Dampf die Zersetzungsreaktion von K-β''-Phasen und die dadurch ausgelöste Vergröberung des Gefüges vermieden werden (Fig. 4b).

### Beispiel 4:

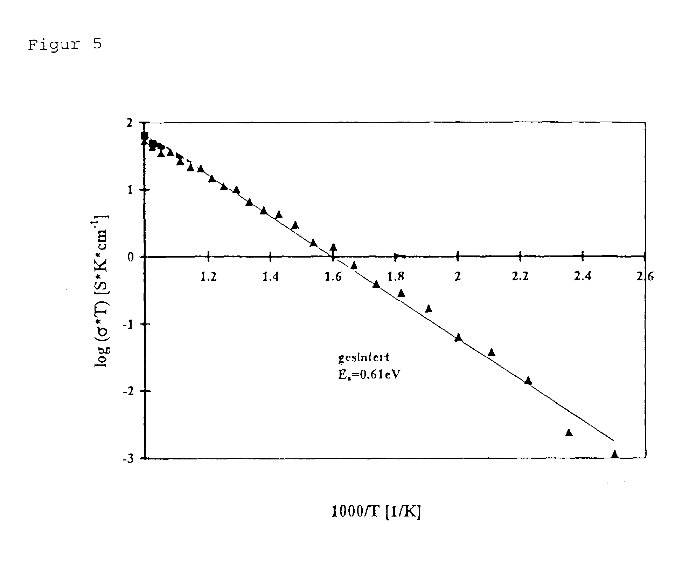

Es wurde die ionische Leitfähigkeit von Flüssigphasen gesinterten Kalium-β/β''-Aluminat bestimmt. Die Meßwerte sind in Figur 5 abgebildet.

Es zeigt sich, daß mit dem erfindungsgemäßen Verfahren Aluminiumoxid-Keramiken mit hoher ionischer Leitfähigkeit erhalten werden konnten.

## Patentansprüche

1. Verwendung eines borhaltigen Sinteradditivs bei der Herstellung von β"-Aluminiumoxid-Keramiken bei einer Temperatur von 1.000°C bis 1.500°C.

2. Verwendung nach Anspruch 1,
**dadurch gekennzeichnet,**
daß das Sinteradditiv zusätzlich ein Alkalimetalloxid umfaßt.

3. Verwendung nach einem der Ansprüche 1 - 2,
**dadurch gekennzeichnet,**
daß das Sinteradditiv ein oder mehrere Metalloxide ausgewählt aus MgO, ZnO, NiO, MnO, FeOₓ, CrOₓ, CoO und SnOₓ umfaßt.

4. Verwendung nach einem der Ansprüche 1 - 3,
**dadurch gekennzeichnet,**
daß das Sinteradditiv KBO₂, K₂B₂O₄, K₂B₄O₇, Mg₂B₂O₅, NaBO₂, Na₂B₂O₄, Na₂B₄O₇, MgB₄O₇, LiBO₂, Li₂B₂O₄, Li₂B₄O₇ oder/und Mg₃B₂O₆ umfaßt.

5. Verwendung nach Anspruch 4,
**dadurch gekennzeichnet,**
daß das Sinteradditiv Na₂B₄O₇ umfaßt.

6. Verwendung nach einem der Ansprüche 1 - 5 zur Herstellung einer K-β"-Aluminiumoxid-Keramik.

7. Verfahren zur Herstellung eines β"-Aluminiumoxid-Keramikformkörpers,
**dadurch gekennzeichnet,**
daß man pulverförmiges Aluminiumoxid durch Sintern bei einer Temperatur von 1.000°C bis 1.500°C unter Zusatz eines borhaltigen Sinteradditivs in einen Keramikformkörper überführt.

8. Verfahren nach Anspruch 7,
**dadurch gekennzeichnet,**
daß man eine K-β"-Aluminiumoxid-Keramik herstellt.

9. Verfahren nach Anspruch 7 oder 8,
**dadurch gekennzeichnet,**
daß man als Aluminiumoxid Bayerit oder/und Böhmit, das gegebenenfalls mit mindestens einem Metalloxid vorgemischt oder vorreagiert ist, einsetzt.

10. Verfahren nach einem der Ansprüche 7 - 9,
**dadurch gekennzeichnet,**
daß man das Sinteradditiv gelöst in einem flüssigen Medium den Keramikteilchen zusetzt, wobei nach Trocknen der resultierenden Mischung die Keramikteilchen mit dem Sinteradditiv beschichtet sind.

11. Verfahren nach einem der Ansprüche 7 - 10,
**dadurch gekennzeichnet,**
daß das Sintern bei einem Alkalimetalloxiddampfdruck von mindestens 1 Pa ausgeführt wird.

12. Verfahren nach einem der Ansprüche 7 - 11,
**dadurch gekennzeichnet,**
daß das Sintern in einer wasserfreien Sinteratmosphäre ausgeführt wird.

13. Verfahren nach einem der Ansprüche 7 - 12,
**dadurch gekennzeichnet,**
daß man das Sintern bei einer Temperatur von 1250°C bis 1400°C durchführt.

14. Verfahren nach einem der Ansprüche 7 - 13,
**dadurch gekennzeichnet,**
daß das borhaltige Sinteradditiv in einer Menge von 0,1 bis 12 Gew.-%, berechnet als B₂O₃, bezogen auf das Gesamtgewicht der Sintermischung, eingesetzt wird.

15. β"-Aluminiumoxid-Keramikformkörper erhältlich durch ein Verfahren nach einem der Ansprüche 7 - 14,
**dadurch gekennzeichnet,**
daß er Bor in einer Menge von 0,1 Gew.-% bis 12 Gew.-%, berechnet als B₂O₃, bezogen auf das Keramikgesamtgewicht, enthält.

16. β"-Aluminiumoxid-Keramikformkörper erhältlich durch ein Verfahren nach einem der Ansprüche 7 - 14,
**dadurch gekennzeichnet,**
daß er Bor in einer Menge von der unteren Nachweisgrenze bis zu 1 Gew.-%, berechnet als B₂O₃, bezogen auf das Keramikgesamtgewicht, enthält.

17. β"-Aluminiumoxid-Keramikformkörper nach Anspruch 15 oder 16,
**dadurch gekennzeichnet,**
daß es sich um einen K-β"-Aluminiumoxid-Keramikformkörper handelt.

18. Verwendung eines Keramikformkörpers gemäß einem der Ansprüche 15 - 17 als Ionenleiter.

## Claims

1. Use of a boron-containing sinter additive for the synthesis of β"-aluminum-oxide ceramics at a temperature from 1 000°C to 1 500°C.

2. Use according to claim 1,
**characterized in that**
the sinter additive additionally comprises an alkali-metal oxide.

3. Use according to one of claims 1 - 2,
**characterized in that**
the sinter additive comprises one or more metal oxides selected from the group comprising MgO, ZnO, NiO, MnO, FeOₓ, CrOₓ, CoO and SnOₓ.

4. Use according to one of claims 1 - 3,
**characterized in that**
the sinter additive comprises KBO₂, K₂B₂O₄, K₂B₄O₇, Mg₂B₂O₅, NaBO₂, Na₂B₂O₄, Na₂B₄O₇, MgB₄O₇, LiBO₂, Li₂B₂O₄, Li₂B₄O₇ and/or Mg₃B₂O₆.

5. Use according to claim 4,
**characterized in that**
the sinter additive comprises Na₂B₄O₇.

6. Use according to one of claims 1 - 5 for the synthesis of a K-β"-aluminumoxide ceramic.

7. Process for the production of a β"- aluminum-oxide ceramic formed piece,
**characterized in that**
powdered aluminum oxide is transformed into a ceramic formed piece by means of sintering at a temperature from 1 000°C to 1 500°C with addition of a boron-containing sinter additive.

8. Process according to claim 7,
**characterized in that**
a K-β"-aluminum-oxide ceramic is synthesized.

9. Process according to claim 7 or 8,
**characterized in that**
as aluminium oxide use is made of Bayerit and/or Böhmit, which may be premixed or prereacted with at least one metal oxide.

10. Process according to one of claims 7 - 9,
**characterized in that**
the sinter additive, dissolved in a liquid medium, is added to the ceramic particles and the resulting mixture dried, after which the ceramic particles exhibit a coating of sinter additive.

11. Process according to one of claims 7 - 10,
**characterized in that**
sintering is carried out at an alkali-metal-oxide vapor pressure of at least 1 Pa.

12. Process according to one of claims 7 - 11,
**characterized in that**
sintering is carried out in a moisture-free sintering atmosphere.

13. Process according to one of claims 7 - 12,
**characterized in that**
sintering is carried out at a temperature of 1250°C to 1400°C.

14. Process according to one of claims 7 - 13,
**characterized in that**
the boron-containing sinter additive is used in a proportion of 0.1 to 12 wt.%, calculated as B₂O₃, relative to the total weight of the sinter mixture.

15. β"-aluminum-oxide ceramic formed piece obtainable by a process according to one of claims 7 - 14,
**characterized in that**
said formed piece contains boron in a proportion of 0.1 wt.% to 12 wt.%, calculated as B₂O₃, relative to the total weight of the ceramic.

16. β"-aluminum-oxide ceramic formed piece obtainable by a process according to one of claims 7 - 14,
**characterized in that**
said formed piece contains boron in a quantity ranging from the lower detection limit to 1 wt.%, calculated as B₂O₃, relative to the total weight of the ceramic.

17. β"-aluminum-oxide ceramic formed piece according to claim 15 or 16,
**characterized in that**
said formed piece is a K-β"-aluminium-oxide ceramic formed piece.

18. Use of a ceramic formed piece according to one of claims 15- 17 as ion conductor.

## Revendications

1. Utilisation d'un additif de frittage contenant du bore dans la fabrication de céramiques d'oxyde d'aluminium β" à une température de 1000°C à 1500°C.

2. Utilisation selon la revendication 1 caractérisée en ce que l'additif de frittage comprend en outre un oxyde de métal alcalin.

3. Utilisation selon l'une des revendications 1 - 2 caractérisée en ce que l'additif de frittage comprend un ou plusieurs oxydes métalliques choisis parmi MgO, ZnO, NiO, MnO, FeOₓ, CrOₓ, CoO et SnOₓ.

4. Utilisation selon l'une des revendications 1 - 3 caractérisée en ce que l'additif de frittage comprend KBO₂, K₂B₂O₄, K₂B₄O₇, Mg₂B₂O₅, NaBO₂, Na₂B₂O₄, Na₂B₄O₇, MgB₄O₇, LiBO₂, Li₂B₂O₄, Li₂B₄O₇ et/ou Mg₃B₂O₆.

5. Utilisation selon la revendication 4 caractérisée en ce que l'additif de frittage comprend Na₂B₄O₇.

6. Utilisation selon l'une des revendications 1 - 5 pour la fabrication d'une céramique d'oxyde d'aluminium β" de type K.

7. Procédé de fabrication d'un corps mis en forme en céramique d'oxyde d'aluminium β" caractérisé en ce que l'on convertit en un corps mis en forme céramique de l'oxyde d'aluminium pulvérulent par frittage à une température de 1000°C à 1500°C en ajoutant un additif de frittage contenant du bore.

8. Procédé selon la revendication 7 caractérisé en ce que l'on fabrique une céramique d'oxyde d'aluminium β" de type K.

9. Procédé selon la revendication 7 ou 8 caractérisé en ce que l'on utilise comme oxyde d'aluminium de la bayerite et/ou de la boehmite que l'on a éventuellement mélangé ou fait réagir au préalable avec au moins un oxyde métallique.

10. Procédé selon l'une des revendications 7 - 9 caractérisé en ce que l'on ajoute l'additif de frittage à l'état dissous dans un milieu liquide aux particules de céramique, les particules de céramique étant recouvertes de l'additif de frittage après séchage du mélange résultant.

11. Procédé selon l'une des revendications 7 - 10 caractérisé en ce que le frittage est réalisé à une pression de vapeur d'oxyde de métal alcalin d'au moins 1 Pa.

12. Procédé selon l'une des revendications 7 - 11 caractérisé en ce que le frittage est réalisé dans une atmosphère de frittage anhydre.

13. Procédé selon l'une des revendications 7 - 12 caractérisé en ce que l'on réalise le frittage à une température de 1250°C à 1400°C.

14. Procédé selon l'une des revendications 7 - 13 caractérisé en ce que l'additif de frittage contenant du bore est utilisé en une quantité de 0,1 à 12% en masse, calculée en B₂O₃, par rapport à la masse totale du mélange de frittage.

15. Corps mis en forme en céramique d'oxyde d'aluminium β" qui peut être obtenu par un procédé selon l'une des revendications 7 - 14 caractérisé en ce qu'il contient du bore en une quantité de 0,1% en masse à 12% en masse, calculée en B₂O₃, par rapport à la masse totale de céramique.

16. Corps mis en forme en céramique d'oxyde d'aluminium β" qui peut être obtenu par un procédé selon l'une des revendications 7 - 14 caractérisé en ce qu'il contient du bore en une quantité située entre la limite inférieure de mise en évidence et 1% en masse, calculée en B₂O₃, par rapport à la masse totale de céramique.

17. Corps mis en forme en céramique d'oxyde d'aluminium β" selon la revendication 15 ou 16 caractérisé en ce qu'il s'agit d'un corps mis en forme en céramique d'oxyde d'aluminium β" de type K.

18. Utilisation d'un corps mis en forme en céramique selon l'une des revendications 15 - 17 comme conducteur d'ions.
